# EUROPÄISCHE PATENTSCHRIFT

(11) **EP 0 519 221 B1**
(45) Veröffentlichungstag und Bekanntmachung des Hinweises auf die Patenterteilung: **06.09.1995**
(21) Anmeldenummer: 92108339.0
(22) Anmeldetag: 18.05.1992
(51) Int. Cl.: H02K 29/14, H02K 29/08

(54) **Elektrische Maschine**
Electric machine
Machine électrique

(30) Priorität: 18.06.1991 DE 4120023
(43) Veröffentlichungstag der Anmeldung: 23.12.1992
(73) Patentinhaber: Heidelberger Druckmaschinen Aktiengesellschaft, D-69019 Heidelberg (DE)
(72) Erfinder: Blaser, Peter Theobald, W-6912 Dielheim (DE); Maass, Jürgen, W-6908 Wiesloch (DE)
(74) Vertreter: Stoltenberg, Heinz-Herbert Baldo

(56) Entgegenhaltungen:
- EP-A- 0 159 069
- DE-A- 2 602 590
- DE-A- 3 910 498
- DE-A- 3 939 868
- DE-U- 9 107 498
- FR-A- 2 574 554
- US-A- 4 162 399
- US-A- 4 988 905

## Beschreibung

Die Erfindung betrifft eine elektrische Maschine gemäß dem Oberbegriff des Anspruchs 1.

Derartige Maschinen sind aus der DE 26 02 590 A1 bekannt, indem ein Lagegebergehäuse zur Justierung relativ zum Maschinenstator in Umfangsrichtung um eine Drehachse verstellbar und fixierbar ist.

Diese bekannte Ausführung weist folgenden Mangel auf: Falls insbesondere elektronische Teile ausfallen, sind diese nur schwer austauschbar. Bei erforderlichem Austausch ist eine zeitaufwendige und schwierige Neujustage erforderlich.

Der Erfindung liegt somit die Aufgabe zugrunde eine Kommutierung und Drehzahlerfassung für bürstenlose elektrische Maschinen zu schaffen, die leicht austauschbar ist, bei der beim ersten Einbau nur eine einmalige und bei Austausch keine weitere Justage erforderlich ist und die für jeden Motor dieser Art verwendbar ist.

Erfindungsgemäß wird diese Aufgabe durch die Merkmale des Anspruchs 1 gelöst.

Durch diese kompakte Ausführung, wonach alle erforderlichen Mittel zur Kommutierung und Drehzahlerfassung kompakt in einem Gehäuse eingebaut sind und dieses direkt außerhalb des Motors austauschbar angebaut ist, ist es ohne Schwierigkeiten möglich, diese Mittel in kurzer Zeit auszutauschen.

Die Vorrichtung weist einen Justagering, einen Rotorteil und einen Geber auf. Der Justagering ist fest mit dem Motorgehäuse verbunden und weist am Umfangsbereich Langlöcher zur Justage auf.

Durch den Justagering ist es möglich, diesen beim Ersteinbau einmal justiert an das Motorgehäuse zu befestigen. Die Justage erfolgt über am Umfang des Justagerings vorgesehene Langlöcher. Der Justagering ist fest mit dem Motorgehäuse verbunden. Der Geber weist ein Gehäuse auf, welches lösbar mit dem Justagering fest verbunden ist und worin eine Platine mit elektronischen Bausteinen zur Rotorlageerkennung und zur Drehzahlerfassung angeordnet ist. Weiterhin ist am Gehäuse des Gebers im Umfangsbereich eine Aussparung vorgesehen, die formschlüssig zur Justage des Gebers in die Arretierung des Justagerings eingreift. Auf diesem Justagering wird das Gehäuse des Gebers verschraubt. Falls ein Austausch der in dem Gehäuse befindlichen Elektronik erforderlich ist, wird lediglich das Gehäuse vom Justagering gelöst und ein neues Gehäuse mit Elektronik darauf gesetzt. Somit ist der Austausch ohne weitere Justage ermöglicht.

Gemäß einer bevorzugten Ausführungsform weist das Rotorteil einen Impulsbecher mit Lamellen zur Rotorlageerfassung und eine Impulstrommel mit Schlitzen (Inkrementen) zur Drehzahlerfassung auf, wobei das Rotorteil fest mit der Motorwelle verbunden ist.

Das Rotorteil ist beispielsweise über eine Paßfeder fest mit der Welle des Motors verbunden. Dieses Rotorteil trägt einerseits einen mit Lamellen versehenen Impulsbecher, der zur Rotorlageerkennung dient. Andererseits umfasst das Rotorteil eine Impulstrommel mit Schlitzen zur Drehzahlerfassung.

Zur Rotorlageerkennung sind vorzugsweise auf der Elektronikplatine mit den Lamellen des Impulsbechers zusammenwirkende Hallmagnetgabelschranken angeordnet.

Zur Drehzahlerfassung sind vorzugsweise auf der Elektronikplatine mit den Schlitzen der Impulstrommel zusammenwirkende Lichtschranken vorgesehen.

Die mit der Erfindung erzielten Vorteile liegen insbesondere darin, daß ausfallgefährdete Teile (insbesondere die Elektronik) in einfacher Weise und in kurzer Zeit austauschbar sind, ohne daß eine Neujustage erforderlich ist.

Ein Ausführungsbeispiel der Erfindung ist in der Zeichnung dargestellt und wird im Folgenden näher beschrieben. Es zeigen:
- Fig. 1: eine Schnittansicht der erfindungsgemäßen Vorrichtung
- Fig. 2: eine Schnittansicht der Vorrichtung paralell zur Motorwelle
- Fig. 3: eine Darstellung des Justageringes.

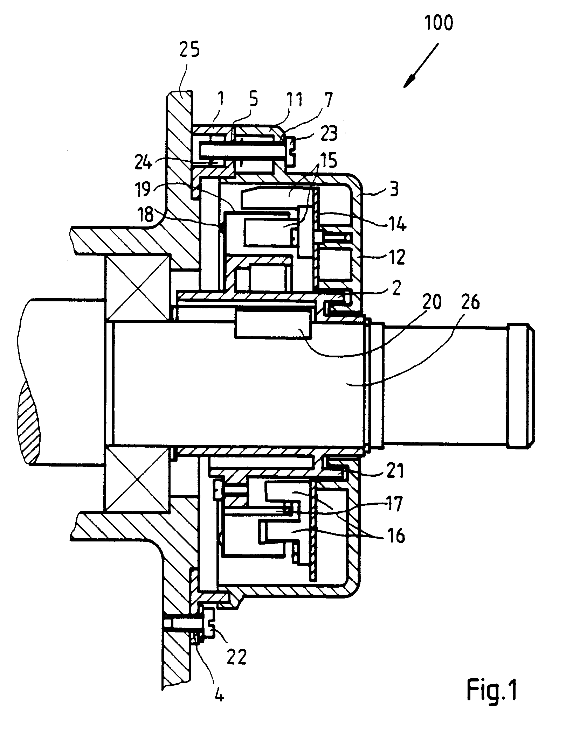

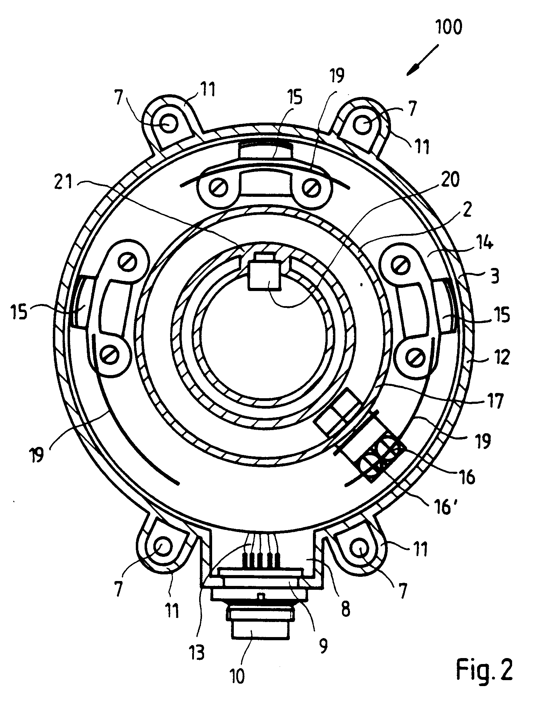

In Fig. 1 ist die Motorwelle 26 mit dem Motorgehäuse 25 dargestellt. Außerhalb des Motors ist die erfindungsgemäße Vorrichtung 100 angeordnet. Sie besteht aus dem Justagering 1, dem Rotorteil 2 und dem Geber 3. Der Justagering 1 ist mittels der Schrauben 22 über die Langlöcher 4 mit dem Motorgehäuse 25 fest verbunden. Auf dem Justagering 1 ist das Gehäuse 12 des Gebers 3 angeordnet. Das Gehäuse 12 weist mehrere Fortsätze 11 auf, die mit Bohrungen 7 versehen sind. Das Gehäuse 12 ist mittels der Schrauben 23 mit dem Justagering 1 verschraubt. Hierzu enthält der Justagering Bohrungen 5 sowie Vertiefungen in die beispielsweise Sechskantmuttern 24 eingeführt werden. Innerhalb des Gebers 3 ist eine Elektronikplatine 14 vorgesehen. Die Elektronikplatine 14 trägt die zur Lageerkennung erforderlichen Hallmagnetgabelschranken 15 sowie Lichtschranken 16 und 16′ (Fig. 2) . Diese Lichtschranken 16 und 16′ sind zur Drehzahlerfassung bestimmt. Das Rotorinnenteil 21 ist beispielsweise mit der Paßfeder 20 fest mit Motorwelle 26 verbunden. Als wesentliche Teile weist das Rotorinnenteil 21 eine Impulstrommel 17 sowie einen Impulsbecher 18 auf. Der Impulsbecher 18 besteht vorzugsweise aus Stahlblech und besitzt mehrere, vorzugsweise 3, Lamellen 19, die sich durch die Hallmagnetgabelschranken 15 bewegen. Die Impulstrommel 17 weist eine Anzahl von Schlitzen, vorzugsweise 128, auf die sich durch die Lichtschranken 16 und 16′ bewegen.

In Fig. 2 ist eine Draufsicht der erfindungsgemäßen Vorrichtung 100 gezeigt, wobei der Justagering 1 nicht dargestellt ist. Die in Fig. 2 aufgeführten Bezugszeichen stimmen mit denen in Fig. 1 überein. Mit den Bezugszeichen 9 ist eine Durchführung für den Stecker 10 bezeichnet. Der Stecker 10 ist mit den Leitungen 13 verbunden, die zu der Elektronik der Elektronikplatine 14 führen. Weiterhin ist eine zweite Lichtschranke 16′ vorgesehen. Die Lichtschranken 16 und 16′ sind elektrisch um vorzugsweise 90° phasenversetzt angeordnet, um je Lichtschranke ein Signal zu erhalten, also insgesamt zwei Signale, die zueinander phasenverschoben sind. Durch geeignete Verknüpfung dieser Signale erhält man eine Verdoppelung der Impulse. Es können auch mehr oder weniger Gabellichtschranken bzw. Hallmagnetschranken (je nach Motor) Verwendung finden.

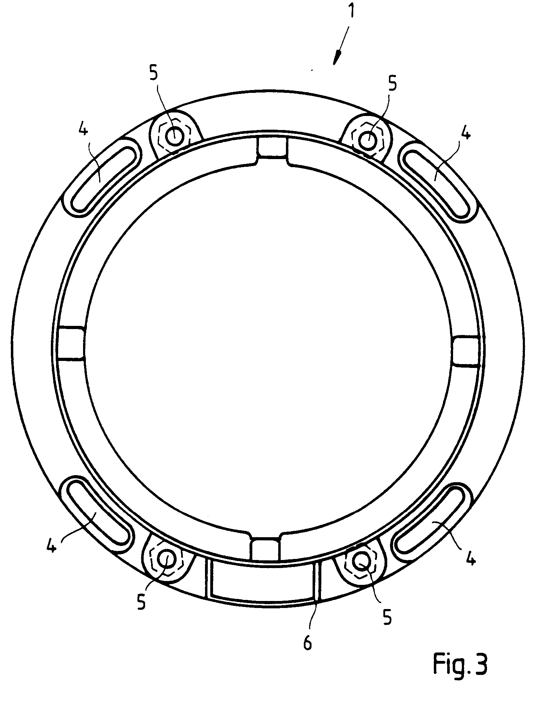

Der in Fig. 3 dargestellte Justagering weist neben den zur Justage erforderlichen Langlöchern 4, die beispielsweise einen Bereich von +/- 8° überstreichen eine Arretierung 6 auf. Diese Arretierung 6 ist so geformt, daß sie spielfrei in die Aussparung 8 (siehe Fig. 2) des Gebergehäuses 12 eingreift.

Ebenso ist eine weitere Ausführungsform denkbar, bei der der Geber so ausgebildet ist, daß die Hallmagnetgabelschranken bzw. die Lichtschranken am inneren Umfang des Gebergehäuses angeordnet sind und in Richtung der Rotorachse weisen. Die hierzu erforderlichen Lamellen bzw. Schlitze sind dann an scheibenförmigen Körpern angeordnet, die sich durch die Hallmagnetgabelschranken bzw. die Lichtschranken bewegen. Die Lamellen bzw. die Schlitze können sowohl auf zwei verschiedenen als auch auf einer Scheibe in geeigneter Weise ausgebildet sein.

### Bezugszeichenliste

- 100: Vorrichtung
- 1: Justagering
- 2: Rotorteil
- 3: Geber
- 4: Langlöcher
- 5: Bohrungen
- 6: Arretierung
- 7: Bohrungen
- 8: Aussparung
- 9: Durchführung
- 10: Stecker
- 11: Fortsätze
- 12: Gehäuse
- 13: Leitungen
- 14: Elektronikplatine
- 15: Hallmagnetgabelschranke
- 16: Lichtschranke
- 16′: Lichtschranke
- 17: Impulstrommel
- 18: Impulsbecher
- 19: Lamellen
- 20: Paßfeder
- 21: Rotorinnenteil
- 22: Schrauben
- 23: Schrauben
- 24: Sechskantmutter
- 25: Motorgehäuse
- 26: Motorwelle

## Patentansprüche

1. Elektrische Maschine, insbesondere ein bürstenloser Gleichstrommotor, mit einem Motorgehäuse (25), einem Rotor (2), einem Stator und einer Vorrichtung mit einem Elektronikteil für die Erfassung der Rotorlage und der Drehzahl, wobei die Vorrichtung (100) außerhalb des Motorgehäuses (25) auf der Motorwelle (26) angeordnet und die Vorrichtung (100) mit dem Motorgehäuse (25) fest verbunden ist,
**dadurch gekennzeichnet,**
daß die Vorrichtung (100) einen Justagering (1), einen Rotorteil (2) und Geber (3) aufweist,
daß der Justagering (1) fest mit dem Motorgehäuse (25) verbunden ist,
daß der Justagering (1) an seinem Umfangsbereich Langlöcher (4) zur Justage aufweist, wobei der Geber (3) ein Gehäuse (12) aufweist und dieses mit dem Justagering (1) lösbar fest verbunden ist und in ihm eine Elektronikplatine (14) mit elektronischen Bausteinen zur Rotorlageerkennung und zur Drehzahlerfassung angeordnet ist und wobei das Gehäuse (12) des Gebers (3) am Umfang eine Aussparung (8) aufweist, die formschlüssig zur Justage des Gebers (3) in die Arretierung (6) des Justageringes (1) eingreift.

2. Elektrische Maschine nach mindestens einem der vorherigen Ansprüche, **dadurch gekennzeichnet**, daß das Rotorteil (2) einen Impulsbecher (18) mit Lamellen (19) zur Rotorlageerfassung und eine Impulstrommel (17) mit Schlitzen (Inkrementen) zur Drehzahlerfassung aufweist, wobei das Rotorteil (2) fest mit der Motorwelle (26) verbunden ist.

3. Elektrische Maschine nach mindestens einem der vorherigen Ansprüche, **dadurch gekennzeichnet,** daß zur Rotorlageerkennung auf der Elektronikplatine (14) mit den Lamellen (19) des Impulsbechers (18) zusammenwirkende Hallmagnetgabelschranken (15) angeordnet sind.

4. Elektrische Maschine nach mindestens einem der vorherigen Ansprüche, **dadurch gekennzeichnet,** daß zur Drehzahlerfassung auf der Elektronikplatine (14) mit den Schlitzen (Inkrementen) der Impulstrommel (17) zusammenwirkende Lichtschranken (16, 16′) angeordnet sind.

## Claims

1. Electrical machine, in particular a brushless DC motor, having a motor housing (25), a rotor (2), a stator and a device having an electronics part for detection of the rotor position and of the rotation speed, the device (100) being arranged outside the motor housing (25) on the motor shaft (26), and the device (100) being firmly connected to the motor housing (25), characterized in that the device (100) has an adjusting ring (1), a rotor part (2) and a transmitter (3), in that the adjusting ring (1) is firmly connected to the motor housing (25), in that the adjusting ring (1) has elongated holes (4) on its circumferential region for adjustment, the transmitter (3) having a housing (12) and the latter being firmly and detachably connected to the adjusting ring (1), and an electronics board (14) having electronics modules for rotor position identification and for rotation speed detection being arranged in said housing (12), and the housing (12) of the transmitter (3) having a cutout (8) on the circumference, which cutout (8) engages in a positively locking manner in the lock (6) of the adjusting ring (1) in order to adjust the transmitter (3).

2. Electrical machine according to at least one of the preceding claims, characterized in that the rotor part (2) has a pulse cup (18) with laminates (19) for rotor position detection and a pulse drum (17) with slots (increments) for rotation speed detection, the rotor part (2) being firmly connected to the motor shaft (26).

3. Electrical machine according to at least one of the preceding claims, characterized in that Hall-magnet vane switches (15), which interact with the laminates (19) of the pulse cup (18), are arranged on the electronics board (14), for rotor position identification.

4. Electrical machine according to at least one of the preceding claims, characterized in that light barriers (16, 16′), which interact with the slots (increments) of the pulse drum (17), are arranged on the electronics board (14), for rotation speed detection.

## Revendications

1. Moteur électrique, en particulier moteur à courant continu sans balai, comprenant une carcasse (25) de moteur, un rotor (2), un stator et un dispositif comprenant une partie électronique de détection de la position du rotor et de la vitesse de rotation, le dispositif (100) étant disposé à l'extérieur de la carcasse (25) du moteur sur l'arbre (26) du moteur et le dispositif (100) étant solidarisé avec la carcasse (25) du moteur,
caractérisé en ce que
le dispositif (100) comprend une bague d'ajustage (1), un élément de rotor (2) et un capteur (3),
en ce que la bague d'ajustage (1) est solidarisée avec la carcasse (25) du moteur,
en ce que la bague d'ajustage (1) comporte dans sa partie circonférentielle des boutonnières (4) d'ajustage, le capteur (3) comprenant une cage (12) et celle-ci étant solidarisée de manière amovible avec la bague d'ajustage (1) et logeant une platine (14) d'électronique équipée de composants électroniques d'identification de la position du rotor et de détection de la vitesse de rotation et la cage (12) du capteur (3) comportant à la circonférence un évidement (8) qui s'emboîte par complémentarité de formes sur l'élément d'arrêt (6) de la bague d'ajustage (1) pour l'ajustage du capteur (3).

2. Moteur électrique selon au moins l'une des revendications précédentes, caractérisé en ce que l'élément de rotor (2) comprend un boîtier métallique (18) d'émission d'impulsions qui comporte des lamelles (19) d'identification de la position du rotor, ainsi qu'un tambour (17) d'émission d'impulsions comportant des fentes (des incréments) de détection de la vitesse de rotation, l'élément de rotor (2) étant solidarisé avec l'arbre (26) du moteur.

3. Moteur électrique selon au moins l'une des revendications précédentes, caractérisé en ce que des barrages (15) à fourche magnétique à effet de Hall, qui coopèrent avec les lamelles (19) du boîtier métallique d'émission d'impulsions (18), sont disposés sur la platine (14) de l'électronique pour l'identification de la position du rotor.

4. Moteur électrique selon au moins l'une des revendications précédentes, caractérisé en ce que des barrages photo-électriques (16, 16′) coopérant avec les fentes (incréments) du tambour (17) d'émission d'impulsions sont disposés sur la platine (14) de l'électronique pour la détection de la vitesse de rotation.
